# EUROPEAN PATENT SPECIFICATION

(11) **EP 4 434 671 B1**
(45) Date of publication and mention of the grant of the patent: **15.10.2025**
(21) Application number: 24163118.3
(22) Date of filing: 13.03.2024
(51) Int. Cl.: B23Q 11/08

(54) **PROTECTION DEVICE**
SCHUTZVORRICHTUNG
DISPOSITIF DE PROTECTION

(30) Priority: 20.03.2023 IT 202300005232
(43) Date of publication of application: 25.09.2024
(73) Proprietor: P.E.I. Protezioni Elaborazioni Industriali S.r.l., 40012 Calderara di Reno (Bologna) (IT)
(72) Inventor: BENEDETTI, Michele, 40033 CASALECCHIO DI RENO (BOLOGNA) (IT); MARDEGAN, Vittorio, 26037 SAN GIOVANNI IN CROCE (CREMONA) (IT)
(74) Representative: Milli, Simone

(56) References cited:
- WO-A1-85/02004
- DE-A1- 3 635 874
- DE-U1- 7 833 003
- JP-A- 2008 012 639

## Description

The present invention relates to a protection device, in particular for working machines.

A particularly felt need of the technical field of interest is to provide a particularly simple and compact protection device, which, advantageously, allows also to protect operators highly efficiently, by isolating them from the machine operative area.

In the field of interest, it is known to build protection devices defined by a plurality of metal lamellae (substantially L-shaped), to which a bellows is connected at the back, i.e. in the area opposite to the one to be protected. A drawback of this kind of application is the difficulty to assemble the metal lamellae to the bellows. In particular, for very large width dimensions (i.e. in the orthogonal direction to the main development of the lamellae), for example in the order of meters, it is needed to assemble and couple the metal lamellae to a bellows which is particularly cumbersome, in all respects. So, not only it is particularly difficult to build a very large bellows, but also the assembly, i.e. coupling of bellows to lamellae is particularly complex and difficult. Such a protection device is known e.g. from Patent Document JP 2008 012639 A.

Therefore, aim of the present invention is to satisfy the above stated need by providing a protection device which can be applied, preferably but not limitingly, to a working machine.

Another aim of the present invention is to provide a protection device, object of the present invention, which can be realized in an extremely simple and quick manner, with low costs.

According to the present invention, such aim is reached by a protection device, object of the present invention, comprising the technical features described in one or more of the appended claims.

The technical features of the invention, according to said aims, can be clearly inferred by the following claims, and the advantages of the same will be clearer in the following detailed description, which refers to the enclosed drawings representing an embodiment as a way of pure and not limiting example, in which:

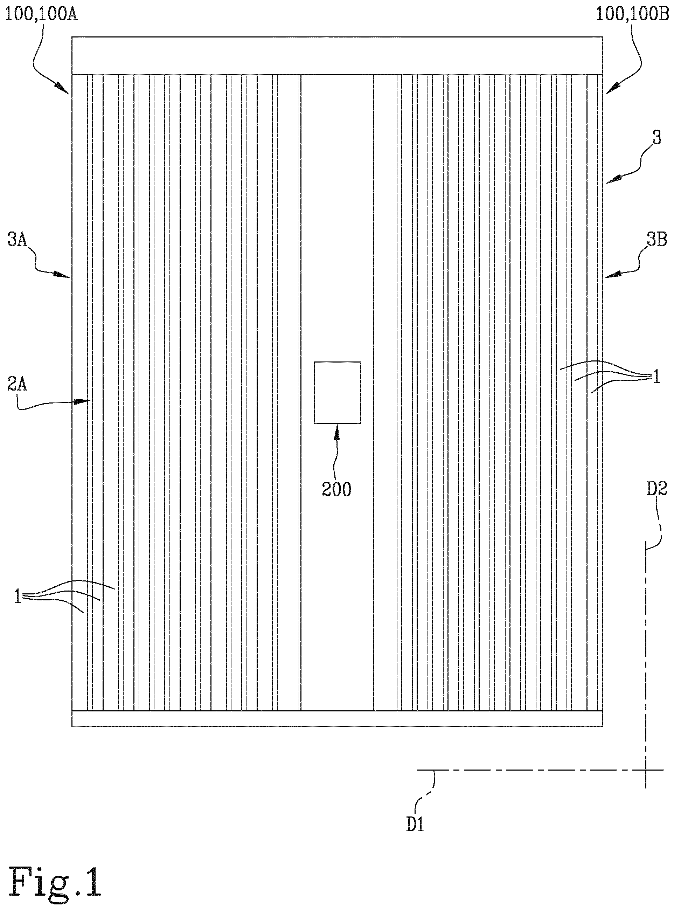

- figure 1 shows a front schematic view of the protection device, object of the present invention;

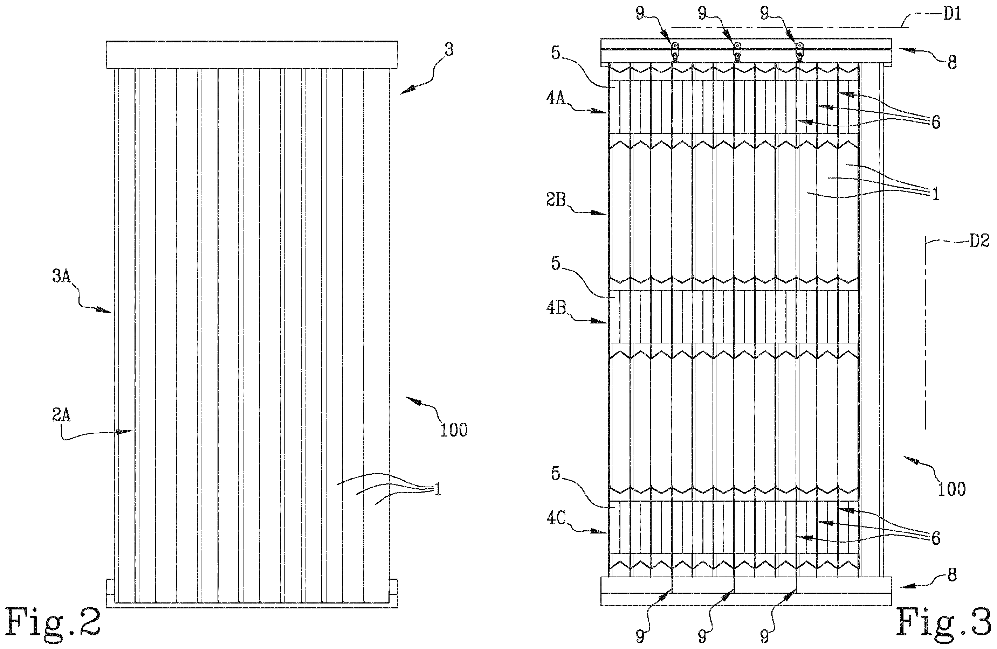

- figure 2 shows a front schematic view of the protection device, object of the present invention;
- figure 3 shows a rear schematic view of the protection device, object of the present invention;
- figure 4 shows a side schematic view of the protection device, object of the present invention;

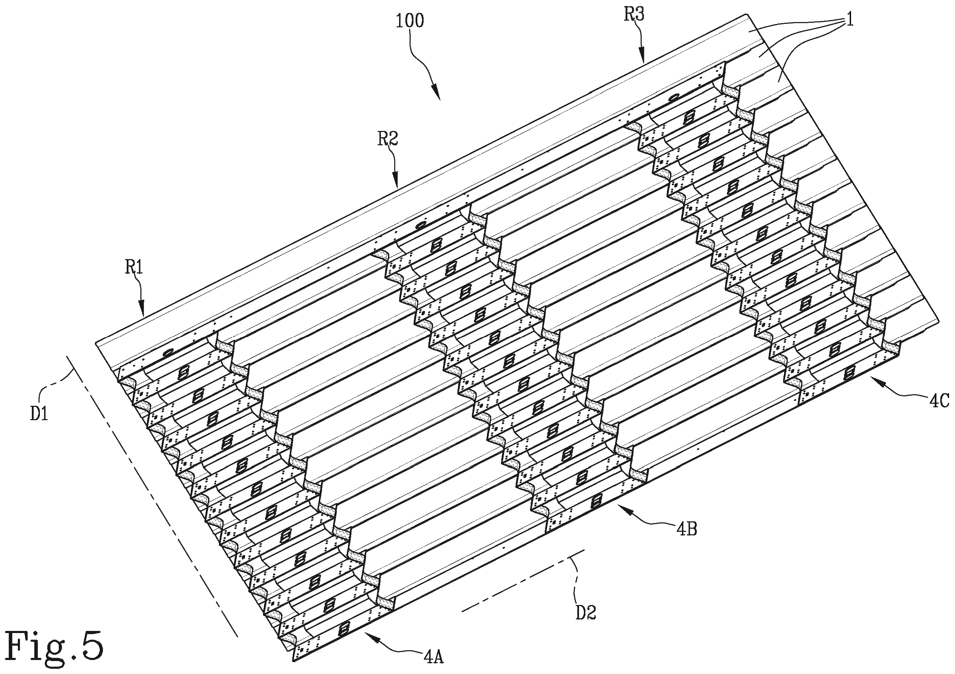

- figure 5 shows a rear perspective schematic view of the protection device, object of the present invention;
- figure 6 shows a rear enlarged perspective schematic view of a particular of the protection device of figure 5;
- figure 7 shows an enlarged perspective schematic view of a particular of the protection device, object of the present invention;

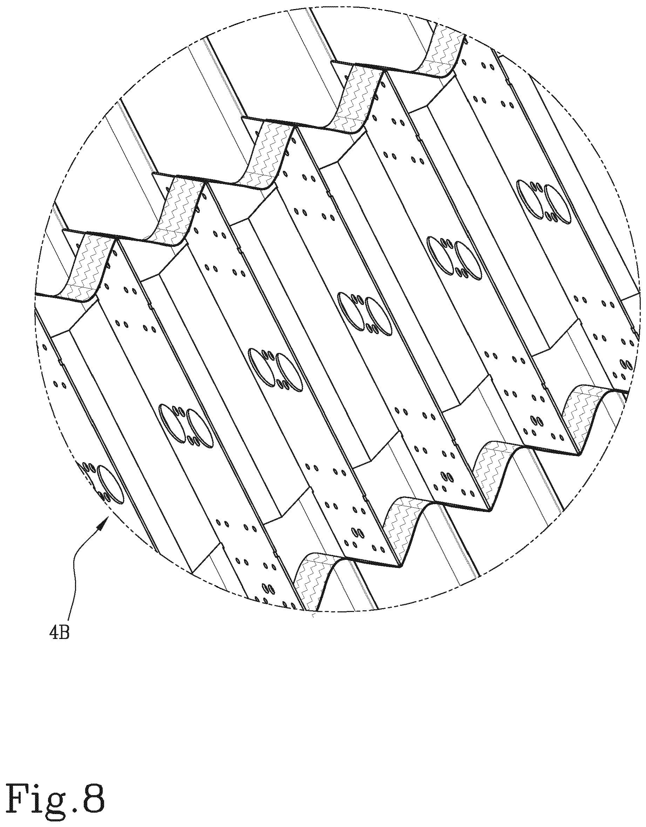

- figure 8 shows a perspective schematic view of a particular of the protection device, object of the present invention;
- figures 9 to 12 show perspective views of particulars of the protection device, object of the present invention according to another embodiment.

According to the present disclosure a protection device 100 is defined, comprising a a plurality of metal lamellae 1, each having a first front wall 2A and a second rear wall 2B, arranged as a sequence and overlapped with each other so that the first front walls 2A define, as a whole, a continuous closing surface 3, said lamellae 1 being relatively movable along a first moving direction D1 in order to modify in at least an area of the continuous closing surface 3 the overlapping degree between at least a portion of said metal lamellae 1.

The lamellae 1 are essentially movable relative to each other so to modify the percentage, i.e. the overlapping degree with each other, between a minimum overlapped configuration and a maximum overlapped configuration.

Anyway, regardless of the overlapping, the lamellae 1 always secure, in each condition, the presence of a continuous closing surface 3, which guarantees the protection, i.e. isolates the front area ZF (front) from the rear area ZP.

As it will be clearer in the following, when the application of the device 100 will be described in more detail, the device 100 is apt to protect elements or portions of a working machine (arranged in the rear zone) from a coolant, oils, powders or chips (also hot ones) which can be present in the front area; the (metal) closing surface 3 guarantees this kind of protection because it prevents oil, coolant, powders and chips from moving from the front area to the rear one.

According to the invention, the device 100 comprises a plurality of dragging modules 4, arranged at the second rear wall 2B of the lamellae 1 in different operative regions R1, R2, R3 with respect to a second direction D2 orthogonal to the first direction D1 so to occupy only partially the rear area corresponding to the closing surface 3.

Each dragging module 4 comprises:
- a bellows piece 5;
- a plurality of supporting frames 6;
- an extension limiting strap 7.

The term "dragging module 4" is used since such modules allow to transmit the relative motion between the various lamellae 1, i.e. the movement of a predetermined lamella 1 (the head or tail lamella, i.e. the first or the last one of the series) determines the dragging of the remaining lamellae.

The bellows 5 is in fact an elastic element, which by joining the various frames 6 allows to transmit the motion to the lamellae 1 connected to the frames 6 themselves.

It is also to be observed that each supporting frame 6 is fastened to the second wall 2B of a metal lamella 1 at a coupling area. The bellows piece 5 is interposed and blocked between each supporting frame 6 and the respective metal lamella 1 so to define ridges C and valleys V between each supporting frame 6 and the next one.

Preferably, the bellows piece 5 is heat-sealed to or glued to the supporting frames 6.

According to another aspect, the extension limiting strap 7 is coupled to said supporting frames 6 to limit a respective extension of the lamellae 1 along said first direction D1, corresponding to a minimum overlapping degree between the lamellae 1.

Preferably, the extension limiting strap 7 is heat-sealed to or glued to the supporting frames 6.

Preferably, as it is shown, the dragging module 4 comprises a couple of extension limiting straps 7, arranged at opposite portions of the supporting frames 6 with respect to (i.e. along) the second orthogonal direction D2.

According to an aspect, the extension limiting strap 7 or the extension limiting straps 7 is/are realized in fabric or plastic material.

It is to be observed that, advantageously, the limiting strap 7 acts as a kind of limiting element for the configuration of minimum overlapping of the lamellae 1; generally, it means that in the other intermediate or minimum overlapping configurations of the lamellae 1, such limiting strap 7 does not exert any active force on the elements of the device 1.

Practically, the limiting strap 7 avoids that the lamellae 1 can be moved, even accidentally, very much apart from each other (over-extension), this being able to cause a discontinuity in the closing surface 3, compromising the isolation between the front and rear region, and thus compromising the function of protection of the device 100.

According to another aspect, the supporting frames 6 are defined by planar (foils) elements in plastic or metal material.

The frames 6, when coupled to the respective lamellae 1, have a longitudinal development along the second direction D2, and, in cross direction, an orthogonal one to the first and second direction (D1, D2).

Concerning the third dimension of such frames 6, i.e. the thickness, it has a development parallel to the first direction D1.

The supporting frames 6 are essentially coupled (orthogonally) to the lamellae 1 at the rear wall 2B, so to protrude with respect to the rear wall 2B.

According to an aspect, the bellows piece 5 defines ridges C in the area between a frame 6 and the next one, and valleys V at the connection area between each frame 6 and the respective metal lamella 1.

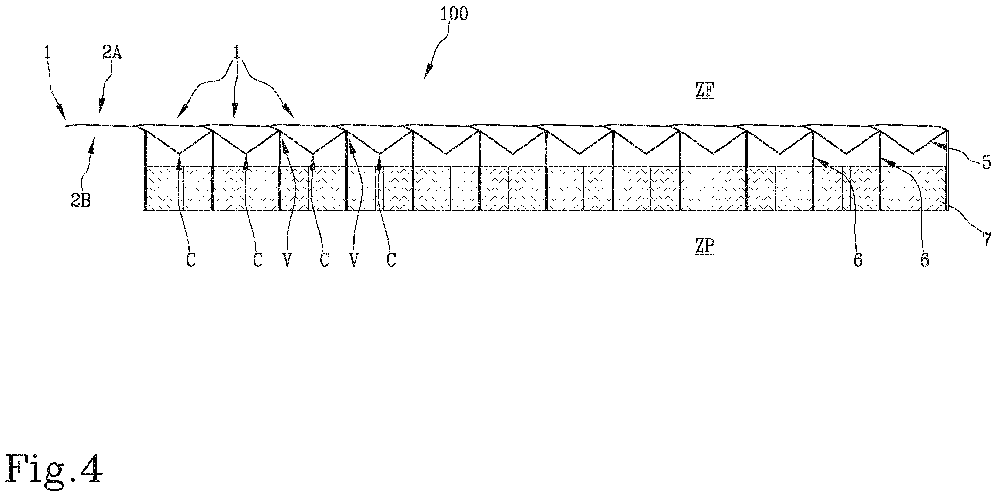

More precisely, as it is shown in figure 4, the bellows piece 5 defines a ridge C between each frame 6 and the next frame 6 and a valley V at each connecting area of a frame 6 to the lamellae 1.

According to another aspect, the protection device 100 comprises a couple of guides 8 arranged at opposite ends of the metal lamellae 1 with respect to the second direction D2.

The guides 8 are developed along the first direction D1.

Preferably, the guides 8 are defined by bars, preferably cylinder bars.

Alternatively, the guides 8 are defined by bars with parallel and orthogonal sides section, which constitute an open geometrical shape, preferably a "C" or "U" shape.

The device 100, according to this aspect, comprises a plurality of hooking elements 9, which can be fixed to at least a portion of said supporting frames 6 and which can be fastened to said guides 8 to allow the metal lamellae 1 to be moved integrally with the dragging modules 4 along said guides 8.

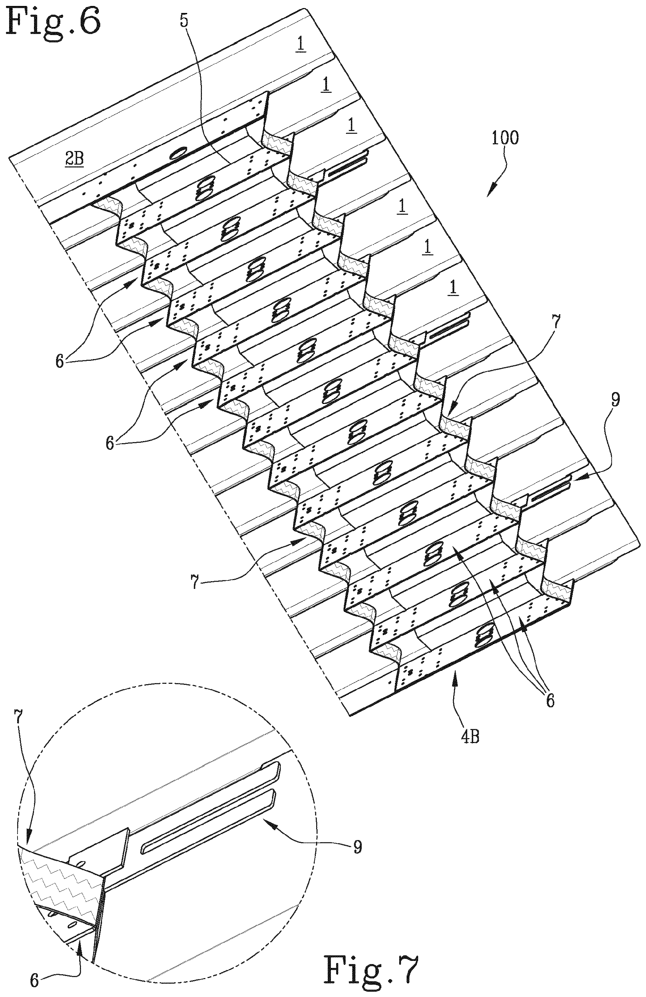

Such hooking elements 9 can be made up of fork elements, as it is shown in figure 7, or articulated joints or other kinds of elements which allow a coupling to the guides 8.

According to an embodiment of the device 100, the continuous closing surface 3 is a substantially horizontal surface.

It is to be observed that, according to an embodiment, the surface 2A can be faced downwards, and the surface 2B can be faced upwards, or according to another embodiment, the surface 2A can be faced downwards and the surface 2B can be faced upwards (open device 100). More generally, it is to be observed that the first moving direction D1 can be on a horizontal or vertical plane.

In case the first moving direction D1 is on a vertical plane, the first moving direction D1 can be vertical (thus allowing a relative motion of the lamellae 1 from up downwards or vice versa) or horizontal (thus allowing a relative motion of the lamellae 1 from right leftwards or vice versa).

According to this embodiment, the device 100 is essentially arranged on the top of a working area, to cover the same.

According to another embodiment of the device 100, the continuous closing surface 3 is a substantially vertical surface.

In the following, the advantages of the protection device 100 will be described.

Such device can be assembled in a very easy way in comparison to the traditional devices of known art.

Namely, the fact that they have small dragging modules 4, since the same do not occupy the whole extension of the closing surface 3 but only a part thereof, allows to assemble them easily.

It is to be observed that to assemble the dragging module 4, it is needed to fix the bellows piece 5 to the respective frames 6, and in the following to associate the strap 7 to the frames themselves.

The thus formed dragging module 4 can be easily controlled, given its reduced dimensions, and hooked easily to the metal lamellae 1.

It is also to be observed that any number of modules 4, according to the needs, can be associated, according to the cross dimensions (along the second direction D2) of the lamellae 1, i.e. of the closing surface 3 along the second direction D2.

Therefore, the device 100 can be realized to be adapted very flexibly to any dimension of the area to be protected, i.e. it can be realized with the most different dimensions of the closing surface 3.

Moreover, since the modules 4 can be all equal to each other, they can be mass-produced, thus allowing to realize remarkable exemplifications and cost reductions.

According to the present invention, it is also defined a working machine, comprising:
- a protection device 100 of the above described kind;
- a working head 200, provided with a movable working element (for example a tool) and connected to an end metal lamella 1 of said protection device 100.

According to another aspect, the machine comprises a first protection device 100A defining a first closing surface 3, 3A and a second protection device 100B defining a second closing surface 3, 3B.

A head lamella 1 of the first device 100A is fixed to the working head 200 at a first side with respect to the first direction D1, while a head lamella 1 of the second device 100B is fixed to the working head 200 at a second side with respect to the first direction D1.

According to what above described, the movement of the working head 200 determines a movement of the lamellae both of the first device 100A and of second device 100B.

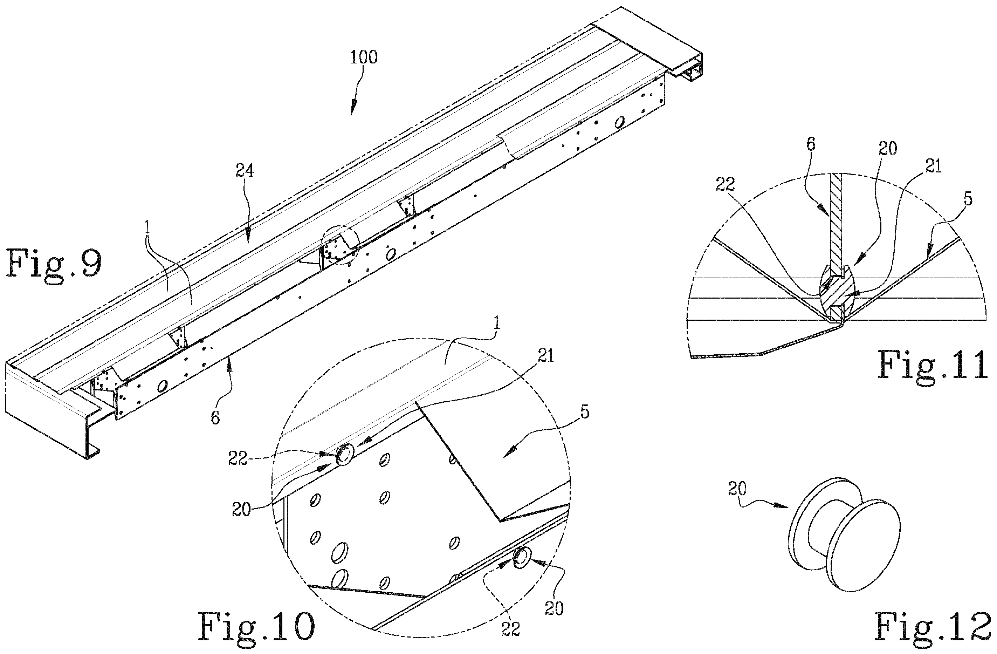

As it is shown in figures 9 and 10, according to another embodiment, which can comprise all the above-mentioned aspects, the metal lamellae 1 are fixed to the supporting frames 6 by means of fixing means 20 (preferably rivets or riveted buttons).

So, the metal lamellae 1 are provided with respective holes 21 and the supporting frames 6 are provided with respective holes 22 as well, apt to be engaged by the fixing means 20.

According to another embodiment, the metal lamellae 1 are fixed to the supporting frames 6 by means of hooks obtained at the lamellae 1.

## Claims

1. A protection device (100), comprising:
- a plurality of metal lamellae (1), each having a first front wall (2A) and a second rear wall (2B), arranged as a sequence and overlapped with each other so that the first front walls (2A) define, as a whole, a continuous closing surface (3), said lamellae (1) being relatively movable along a first moving direction (D1) in order to modify in at least an area of the continuous closing surface (3) the overlapping degree between at least a portion of said metal lamellae (1),
- a plurality of dragging modules (4), arranged at the second rear wall (2B) of the lamellae (1) in different operative regions (R1, R2, R3) with respect to a second direction (D2) orthogonal to the first direction (D1) so to occupy only partially the rear area corresponding to the closing surface (3), each dragging module (4) comprising:
- a bellows piece (5);
- a plurality of supporting frames (6);
- an extension limiting strap (7);
and wherein
- each supporting frame (6) is fastened to the second wall (2B) of a metal lamella (1) at a coupling area;
- said bellows piece (5) is interposed and blocked between each supporting frame (6) and the respective metal lamella (1) so to define ridges (C) and valleys (V) between each supporting frame (6) and the next one,
- said extension limiting strap (7) is coupled to said supporting frames (6) to limit a respective extension of the lamellae (1) along the mentioned first direction (D1), corresponding to a minimum overlapping degree between the lamellae (1).

2. The protection device (100) according to the preceding claim, wherein at least a dragging module (4) comprises a couple of extension limiting straps (7), arranged at opposite portions of the supporting frames (6) with respect to the second orthogonal direction (D2).

3. The protection device (100) according to any one of the preceding claims, wherein the extension limiting strap (7) or the extension limiting straps (7) is/are realized in fabric or plastic material.

4. The protection device (100) according to any one of the preceding claims, wherein the supporting frames (6) are defined by planar elements in plastic or metal material.

5. The protection device (100) according to any one of the preceding claims, wherein the bellows piece (5) defines ridges in the area between a frame (6) and the next one, and valleys at the connection area between each frame (6) and the respective metal lamella (1).

6. The protection device (100) according to any one of the preceding claims, comprising a couple of guides (8) arranged at opposite ends of the metal lamellae (1) with respect to the second direction (D2) and comprising a plurality of hooking elements (9), which can be fixed to at least a portion of said supporting frames (6) and which can be fastened to said guides (8) to allow the metal lamellae to be moved integrally with the dragging modules (4) along said guides (8).

7. The protection device (100) according to any one of the preceding claims, wherein the continuous closing surface (3) is a substantially horizontal surface.

8. The protection device (100) according to the preceding claim, wherein the first front walls (2A) are faced downwards, and the second rear walls (2B) are faced upwards.

9. The protection device (100) according to the preceding claim 7, wherein the first front walls (2A) are faced downwards, and the second rear walls (2B) are faced upwards.

10. The protection device (100) according to any one of the preceding claims, wherein the continuous closing surface (3) is a substantially vertical surface.

11. The protection device (100) according to the preceding claim 10, wherein the first moving direction (D1) is vertical, so that the respective lamellae (1) move from up downwards or vice versa.

12. The protection device (100) according to the preceding claim 10, wherein the first moving direction (D1) is horizontal, so that the respective lamellae (1) move from right leftwards or vice versa.

13. The protection device (100) according to any one of the preceding claims, wherein the bellows piece (5) is heat-sealed to or glued on the supporting frames (6).

14. The protection device (100) according to any one of the preceding claims, wherein the extension limiting strap (7) is heat-sealed to or glued on the supporting frames (6).

15. The protection device (100) according to any one of the preceding claims, wherein the metal lamellae (1) are fixed to the supporting frames (6) by means of a plurality of fixing means (20).

16. The protection device (100) according to the preceding claim, wherein the metal lamellae (1) are provided with respective holes (21) and the supporting frames (6) are provided with respective holes (22) as well, apt to be engaged by the fixing elements (20).

17. Working machine, comprising:
- a protection device (100) according to any one of the preceding claims;
- a working head (200), provided with a movable working element and connected to an end metal lamella (1) of said protection device (100).

18. Working machine according to the preceding claim, comprising a first protection device (100A) defining a first closing surface (3, 3A) and a second protection device (100B) defining a second closing surface (3, 3B), a head lamella (1) of the first device (100A) being fixed to the working head (200) at a first side with respect to the first direction (D1) while a head lamella (1) of the second device (100B) being fixed to the working head (200) at a second side with respect to the first direction (D1).

## Patentansprüche

1. Schutzvorrichtung (100), umfassend:
- eine Vielzahl von Metalllamellen (1), die jeweils eine erste Frontwand (2A) und eine zweite Rückwand (2B) aufweisen, die als Abfolge und miteinander überlappt angeordnet sind, sodass die ersten Frontwände (2A) insgesamt eine durchgehende Verschlussoberfläche (3) definieren, wobei die Lamellen (1) relativ entlang einer ersten Bewegungsrichtung (D1) bewegbar sind, um mindestens in einem Bereich der durchgehenden Verschlussoberfläche (3) den Überlappungsgrad zwischen mindestens einem Abschnitt der Metalllamellen (1) zu verändern;
- eine Vielzahl von Ziehmodulen (4), die an der zweiten Rückwand (2B) der Lamellen (1) in verschiedenen Betriebsregionen (R1, R2, R3) in Bezug auf eine zweite Richtung (D2) rechtwinkelig zu der ersten Richtung (D1) angeordnet sind, sodass sie nur teilweise den rückseitigen Bereich entsprechend der Verschlussoberfläche (3) bedecken, wobei ein jedes Ziehmodul (4) Folgendes umfasst:
- ein Faltenbalg-Stück (5);
- eine Vielzahl von Stützrahmen (6);
- einen Ausdehnungsbegrenzungsgurt (7),
und wobei
- ein jeder Stützrahmen (6) an der zweiten Wand (2B) einer Metalllamelle (1) an einem Kupplungsbereich befestigt ist;
- das Faltenbalg-Stück (5) zwischen einem jeden Stützrahmen (6) und der jeweiligen Metalllamelle (1) eingesetzt und festgespannt ist, um Erhöhungen (C) und Vertiefungen (V) zwischen einem jeden Stützrahmen (6) und dem nächsten zu definieren;
- der Ausdehnungsbegrenzungsgurt (7) mit den Stützrahmen (6) gekuppelt ist, um eine jeweilige Ausdehnung der Lamellen (1) entlang der erwähnten ersten Richtung (D1) entsprechend einem Mindestüberlappungsgrad zwischen den Lamellen (1) zu begrenzen.

2. Schutzvorrichtung (100) nach dem vorhergehenden Anspruch, wobei mindestens ein Ziehmodul (4) ein Paar von Ausdehnungsbegrenzungsgurten (7) umfasst, die an entgegengesetzten Abschnitten der Stützrahmen (6) in Bezug auf die zweite rechtwinkelige Richtung (D2) angeordnet sind.

3. Schutzvorrichtung (100) nach einem der vorhergehenden Ansprüche, wobei der Ausdehnungsbegrenzungsgurt (7) oder die Ausdehnungsbegrenzungsgurte (7) aus Textil- oder Kunststoff gefertigt ist/sind.

4. Schutzvorrichtung (100) nach einem der vorhergehenden Ansprüche, wobei die Stützrahmen (6) durch ebenflächige Elemente aus Kunststoff- oder Metallmaterial definiert sind.

5. Schutzvorrichtung (100) nach einem der vorhergehenden Ansprüche, wobei das Faltenbalg-Stück (5) Erhöhungen in dem Bereich zwischen einem Rahmen (6) und dem nächsten und Vertiefungen an dem Verbindungsbereich zwischen jedem Rahmen (6) und der jeweiligen Metalllamelle (1) definiert.

6. Schutzvorrichtung (100) nach einem der vorhergehenden Ansprüche, umfassend ein Paar Führungen (8), die an entgegengesetzten Enden der Metalllamellen (1) in Bezug auf die zweite Richtung (D2) angeordnet sind und eine Vielzahl von Hakenelementen (9) umfassen, die an mindestens einem Abschnitt der Stützrahmen (6) fixiert werden können und die an den Führungen (8) befestigt werden können, um zu ermöglichen, dass die Metalllamellen fest verbunden mit den Ziehmodulen (4) entlang der Führungen (8) bewegt werden.

7. Schutzvorrichtung (100) nach einem der vorhergehenden Ansprüche, wobei die durchgehende Verschlussoberfläche (3) eine im Wesentlichen horizontale Oberfläche ist.

8. Schutzvorrichtung (100) nach dem vorhergehenden Anspruch, wobei die ersten Frontwände (2A) nach unten gerichtet sind und die zweiten Rückwände (2B) nach oben gerichtet sind.

9. Schutzvorrichtung (100) nach dem vorhergehenden Anspruch 7, wobei die ersten Frontwände (2A) nach unten gerichtet sind und die zweiten Rückwände (2B) nach oben gerichtet sind.

10. Schutzvorrichtung (100) nach einem der vorhergehenden Ansprüche, wobei die durchgehende Verschlussoberfläche (3) eine im Wesentlichen vertikale Oberfläche ist.

11. Schutzvorrichtung (100) nach dem vorhergehenden Anspruch 10, wobei die erste Bewegungsrichtung (D1) vertikal ist, sodass sich die jeweiligen Lamellen (1) von oben nach unten oder umgekehrt bewegen.

12. Schutzvorrichtung (100) nach dem vorhergehenden Anspruch 10, wobei die erste Bewegungsrichtung (D1) horizontal ist, sodass sich die jeweiligen Lamellen (1) von rechts nach links oder umgekehrt bewegen.

13. Schutzvorrichtung (100) nach einem der vorhergehenden Ansprüche, wobei das Faltenbalg-Stück (5) auf den Stützrahmen (6) heißgesiegelt oder geklebt ist.

14. Schutzvorrichtung (100) nach einem der vorhergehenden Ansprüche, wobei der Ausdehnungsbegrenzungsgurt (7) auf den Stützrahmen (6) heißgesiegelt oder geklebt ist.

15. Schutzvorrichtung (100) nach einem der vorhergehenden Ansprüche, wobei die Metalllamellen (1) an den Stützrahmen (6) mittels einer Vielzahl von Fixiermitteln (20) fixiert sind.

16. Schutzvorrichtung (100) nach dem vorhergehenden Anspruch, wobei die Metalllamellen (1) mit jeweiligen Löchern (21) versehen sind und die Stützrahmen (6) ebenfalls mit jeweiligen Löchern (22) versehen sind, die geeignet sind, damit die Fixierelemente (20) mit ihnen in Eingriff gelangen.

17. Arbeitsmaschine, umfassend:
- eine Schutzvorrichtung (100) nach einem der vorhergehenden Ansprüche;
- einen Arbeitskopf (200), der mit einem bewegbaren Arbeitselement versehen und mit einer Endmetalllamelle (1) der Schutzvorrichtung (100) verbunden ist.

18. Arbeitsmaschine nach dem vorhergehenden Anspruch, umfassend eine erste Schutzvorrichtung (100A), die eine erste geschlossene Oberfläche (3, 3A) definiert, und eine zweite Schutzvorrichtung (100B), die eine zweite Verschlussoberfläche (3, 3B) definiert, wobei eine stirnseitige Lamelle (1) der ersten Vorrichtung (100A) an dem Arbeitskopf (200) an einer ersten Seite in Bezug auf die erste Richtung (D1) fixiert ist, während eine stirnseitige Lamelle (1) der zweiten Vorrichtung (100B) an dem Arbeitskopf (200) an einer zweiten Seite in Bezug auf die erste Richtung (D1) fixiert ist.

## Revendications

1. Dispositif de protection (100), comprenant :
- une pluralité de lamelles métalliques (1), ayant chacune une première paroi avant (2A) et une seconde paroi arrière (2B), agencées en séquence et se chevauchant l'une l'autre de sorte que les premières parois avant (2A) définissent, dans leur ensemble, une surface de fermeture continue (3), lesdites lamelles (1) étant relativement mobiles le long d'une première direction de déplacement (D1) afin de modifier dans au moins une zone de la surface de fermeture continue (3) le degré de chevauchement entre au moins une portion desdites lamelles métalliques (1),
- une pluralité de modules traînants (4), disposés au niveau de la seconde paroi arrière (2B) des lamelles (1) dans différentes régions opérationnelles (R1, R2, R3) par rapport à une seconde direction (D2) orthogonale à la première direction (D1) de manière à n'occuper que partiellement la zone arrière correspondant à la surface de fermeture (3), chaque module traînant (4) comprenant :
- une pièce en soufflet (5) ;
- une pluralité de cadres de support (6) ;
- une sangle de limitation d'extension (7) ;
et dans lequel
- chaque cadre de support (6) est fixé à la seconde paroi (2B) d'une lamelle métallique (1) au niveau d'une zone de couplage ;
- ladite pièce en soufflet (5) est interposée et bloquée entre chaque cadre de support (6) et la lamelle métallique (1) respective de manière à définir des arêtes (C) et des creux (V) entre chaque cadre de support (6) et le suivant,
- ladite sangle de limitation d'extension (7) est couplée auxdits cadres de support (6) pour limiter une extension respective des lamelles (1) le long de la première direction (D1) mentionnée, correspondant à un degré de chevauchement minimum entre les lamelles (1).

2. Dispositif de protection (100) selon la revendication précédente, dans lequel au moins un module de glissement (4) comprend une paire de sangles de limitation d'extension (7), agencées au niveau de portions opposées des cadres de support (6) par rapport à la seconde direction orthogonale (D2).

3. Dispositif de protection (100) selon l'une quelconque des revendications précédentes, dans lequel la sangle de limitation d'extension (7) ou les sangles de limitation d'extension (7) est/sont réalisée(s) en tissu ou en matière plastique.

4. Dispositif de protection (100) selon l'une quelconque des revendications précédentes, dans lequel les cadres de support (6) sont définis par des éléments planaires en matière plastique ou métallique.

5. Dispositif de protection (100) selon l'une quelconque des revendications précédentes, dans lequel la pièce en soufflet (5) définit des arêtes dans la zone entre un cadre (6) et le suivant, et des creux au niveau de la zone de connexion entre chaque cadre (6) et la lamelle métallique (1) respective.

6. Dispositif de protection (100) selon l'une quelconque des revendications précédentes, comprenant une paire de guides (8) agencés aux extrémités opposées des lamelles métalliques (1) par rapport à la seconde direction (D2) et comprenant une pluralité d'éléments d'accrochage (9), qui peuvent être fixés à au moins une portion desdits cadres de support (6) et qui peuvent être fixés auxdits guides (8) pour permettre aux lamelles métalliques d'être déplacées intégralement avec les modules traînants (4) le long desdits guides (8).

7. Dispositif de protection (100) selon l'une quelconque des revendications précédentes, dans lequel la surface de fermeture continue (3) est une surface substantiellement horizontale.

8. Dispositif de protection (100) selon la revendication précédente, dans lequel les premières parois avant (2A) sont tournées vers le bas, et les secondes parois arrière (2B) sont tournées vers le haut.

9. Dispositif de protection (100) selon la revendication précédente 7, dans lequel les premières parois avant (2A) sont tournées vers le bas, et les secondes parois arrière (2B) sont tournées vers le haut.

10. Dispositif de protection (100) selon l'une quelconque des revendications précédentes, dans lequel la surface de fermeture continue (3) est une surface substantiellement verticale.

11. Dispositif de protection (100) selon la revendication précédente 10, dans lequel la première direction de déplacement (D1) est verticale, de sorte que les lamelles (1) respectives se déplacent de haut en bas ou vice versa.

12. Dispositif de protection (100) selon la revendication précédente 10, dans lequel la première direction de déplacement (D1) est horizontale, de sorte que les lamelles (1) respectives se déplacent de la droite vers la gauche ou vice versa.

13. Dispositif de protection (100) selon l'une quelconque des revendications précédentes, dans lequel la pièce en soufflet (5) est soudée à chaud ou collée sur les cadres de support (6).

14. Dispositif de protection (100) selon l'une quelconque des revendications précédentes, dans lequel la sangle de limitation d'extension (7) est soudée à chaud ou collée sur les cadres de support (6).

15. Dispositif de protection (100) selon l'une quelconque des revendications précédentes, dans lequel les lamelles métalliques (1) sont fixées aux cadres de support (6) au moyen d'une pluralité de moyens de fixation (20) .

16. Dispositif de protection (100) selon la revendication précédente, dans lequel les lamelles métalliques (1) sont pourvues de trous (21) respectifs et les cadres de support (6) sont également pourvus de trous (22) respectifs, aptes à être engagés par les éléments de fixation (20).

17. Machine de travail, comprenant :
- un dispositif de protection (100) selon l'une quelconque des revendications précédentes ;
- une tête de travail (200), pourvue d'un élément de travail mobile et reliée à une lamelle métallique d'extrémité (1) dudit dispositif de protection (100).

18. Machine de travail selon la revendication précédente, comprenant un premier dispositif de protection (100A) définissant une première surface de fermeture (3, 3A) et un second dispositif de protection (100B) définissant une seconde surface de fermeture (3, 3B), une lamelle de tête (1) du premier dispositif (100A) étant fixée à la tête de travail (200) d'un premier côté par rapport à la première direction (D1) tandis qu'une lamelle de tête (1) du second dispositif (100B) est fixée à la tête de travail (200) d'un second côté par rapport à la première direction (D1).
